Europäisches Patentamt

European Patent Office

Office européen des brevets

(19)

(11) Numéro de publication: **0 022 725**
A1

(12) ## DEMANDE DE BREVET EUROPEEN

(21) Numéro de dépôt: **80401057.7**

(22) Date de dépôt: **11.07.80**

(51) Int. Cl.³: **H 02 M 3/155,** H 01 H 59/00,
H 01 H 47/00, G 01 R 19/165

(30) Priorité: **17.07.79 FR 7918506**

(43) Date de publication de la demande: **21.01.81
Bulletin 81/3**

(84) Etats contractants désignés: **CH DE GB IT LI NL**

(71) Demandeur: **Lewiner, Jacques, 5, rue Bory d'Arnex,
F-92210 Saint-Cloud (FR)**
Demandeur: **Hennion, Claude, 18, rue Flatters,
F-75005 Paris (FR)**
Demandeur: **Perino, Didier, 10, rue de Bellevue,
F-92150 Suresnes (FR)**

(72) Inventeur: **Lewiner, Jacques, 5, rue Bory d'Arnex,
F-92210 Saint-Cloud (FR)**
Inventeur: **Hennion, Claude, 18, rue Flatters,
F-75005 Paris (FR)**
Inventeur: **Perino, Didier, 10, rue de Bellevue,
F-92150 Suresnes (FR)**

(74) Mandataire: **Behaghel, Pierre et al, CABINET
PLASSERAUD 84 rue d'Amsterdam, F-75009 Paris (FR)**

(54) **Perfectionnements aux transducteurs électromécaniques.**

(57) Pour commander les basculements d'une électrode mobile 4 d'un condensateur 2 à électret 9 à l'aide de signaux de tension continue ou redressée v de faible amplitude, on interpose, entre la source 1 de ces signaux et le condensateur, successivement un oscillateur 10 composé de transistors à effet de champ complémentaires et propre à transformer les signaux continus en signaux alternatifs à fréquence élevée, puis un élévateur-redresseur 11 à étages additionnels à diode et capacité, de façon à élaborer des signaux de tension continue V d'amplitude élevée sans apport d'énergie extérieure.

1

## Perfectionnements aux transducteurs électromécaniques

L'invention est relative aux dispositifs transducteurs destinés à transformer en une action mécanique un signal de tension électrique continue d'amplitude relativement faible, dispositifs comportant un condensateur entre les deux électrodes duquel est appliqué ledit signal, l'une de ces électrodes étant mobile et les déplacements de cette électrode constituant l'action mécanique ci-dessus, laquelle est exploitée à toutes fins désirables telle que le déclenchement d'une alarme ou d'une manoeuvre de sécurité, la commutation d'un circuit électrique, optique ou pneumatique, ou l'entraînement d'un mécanisme.

Par tension "continue", on entend ici et dans ce qui suit, aussi bien une tension réellement continue qu'une tension variable comportant une composante majoritaire continue ou encore qu'une tension variable redressée.

L'invention vise plus particulièrement, mais non exclusivement, parmi les dispositifs transducteurs en question, ceux qui comprennent entre les armatures du condensateur un électret, c'est-à-dire une feuille diélectrique chargée électriquement en permanence, et plus particulièrement encore, parmi ces derniers dispositifs, mais encore non exclusivement, ceux pour lesquels le signal de tension appliqué entre les électrodes du condensateur est engendré par induction à partir d'une variation de flux magnétique.

Elle a pour but, surtout, de rendre les dispositifs considérés tels qu'ils se prêtent à l'exploitation de signaux de tension d'amplitude relativement faible, et ce sans apport d'énergie extérieure.

Les dispositifs du genre en question conformes à l'invention sont essentiellement caractérisés en ce qu'ils comprennent, interposés successivement entre une source de tension continue v d'amplitude relativement faible et le condensateur, un oscillateur électrique comportant au moins deux transistors complémentaires, de préférence à effet de champ, propre à transformer ladite tension v en une tension alternative de même amplitude à fréquence relativement élevée, et un circuit propre à élever l'amplitude de ladite tension alternative et à redresser cette tension de façon à élaborer une tension continue V d'amplitude très supérieure à celle de la tension v, laquelle tension V est appliquée entre les électrodes du condensateur.

Dans des modes de réalisation préférés, on a recours en outre à l'une et/ou à l'autre des dispositions suivantes :

- l'amplitude de la tension v est comprise entre 1 et 25 Volts et celle de la tension V est comprise entre 50 et 250 Volts,

- la fréquence de la tension sortant de l'oscillateur est comprise entre 100 Hz et 100 $^k$Hz,

- l'oscillateur comprend au moins une paire de transistors complémentaires montés en inverseur, notamment du type CMOS, et de préférence deux telles paires,

- le circuit élévateur-redresseur est constitué d'une façon en soi connue par une série d'étages additionnels de tension à diode et capacité,

- dans un dispositif transducteur selon les deux alinéas précédents, il est prévu, entre l'oscillateur et la série d'étages additionnels de tension, un troisième inverseur, notamment du type C MOS,

- le dispositif transducteur comprend, en plus d'un premier ensemble composé d'un oscillateur du genre indiqué ci-dessus et d'un circuit élévateur-redresseu du genre indiqué ci-dessus, au moins un second ensemble du même genre, l'oscillateur de ce second ensemble étant alimenté par la sortie du circuit élévateur-redresseur du premier ensemble,

- le circuit élévateur-redresseur comprend un transformateur et un redresseur,

- un dispositif de limitation de tension est disposé à l'entrée de l'oscillateur,

- un dispositif de limitation de tension est disposé à la sortie du circuit élévateur-redresseur.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant au dessin ci-annexé d'une manière, bien entendu, non limitative.

La fig. 1, de ce dessin, montre, très schématiquement, un dispositif transducteur électromécanique établi selon l'invention, y compris son circuit d'alimentation électrique.

Les fig. 2, 3 et 4 montrent, de manière encore schématique, mais un peu plus détaillée que la fig. 1, des portions différentes de ce circuit d'alimentation établies conformément à l'invention.

D'une façon connue en soi, le dispositif transducteur considéré comprend :

- une source 1 propre à élaborer des signaux de tension continue $v$ d'amplitude $v_o$ relativement faible, tels que par exemple ceux engendrés par des piles de poche ou des batteries, d'amplitude généralement comprise entre 1 et 24 Volts, ou encore ceux engendrés par induction dans un enroulement conducteur à partir de variations de flux magnétique, puis redressement,

- un condensateur 2 comprenant deux armatures ou électrodes, savoir une électrode fixe 3 et une électrode mobile 4, supposée à titre d'exemple montée de façon pivotante autour d'un axe 5,

- des moyens 6 pour solliciter l'électrode 4 dans le sens (flèche f) opposé à celui d'attraction électrostatique mutuelle des deux électrodes,

- et des moyens 7 pour exploiter les basculements de ladite électrode 4 en réponse à l'application des signaux $\underline{v}$ ci-dessus entre les deux électrodes 3 et 4.

Les moyens de sollicitation 6 peuvent être de toute nature désirable, notamment électrique ou mécanique : dans des modes de réalisation préférés, ils sont constitués par un aimant permanent propre à refermer son circuit magnétique dans une armature liée à l'électrode mobile 4.

Les moyens d'exploitation 7 peuvent aussi être constitués de toute manière désirable, notamment d'un type à commande optique ou pneumatique : dans des modes de réalisation préférés, ils comprennent un interrupteur électrique 8 dont l'actionnement (ouverture ou fermeture) peut être exploité de toute façon désirable, notamment aux fins de commande d'une alarme sonore ou visuelle, ou aux fins de déclenchement d'une manoeuvre de sécurité ou autre.

En outre, dans les modes de réalisation préférés, un électret 9 est interposé entre les électrodes 3 et 4.

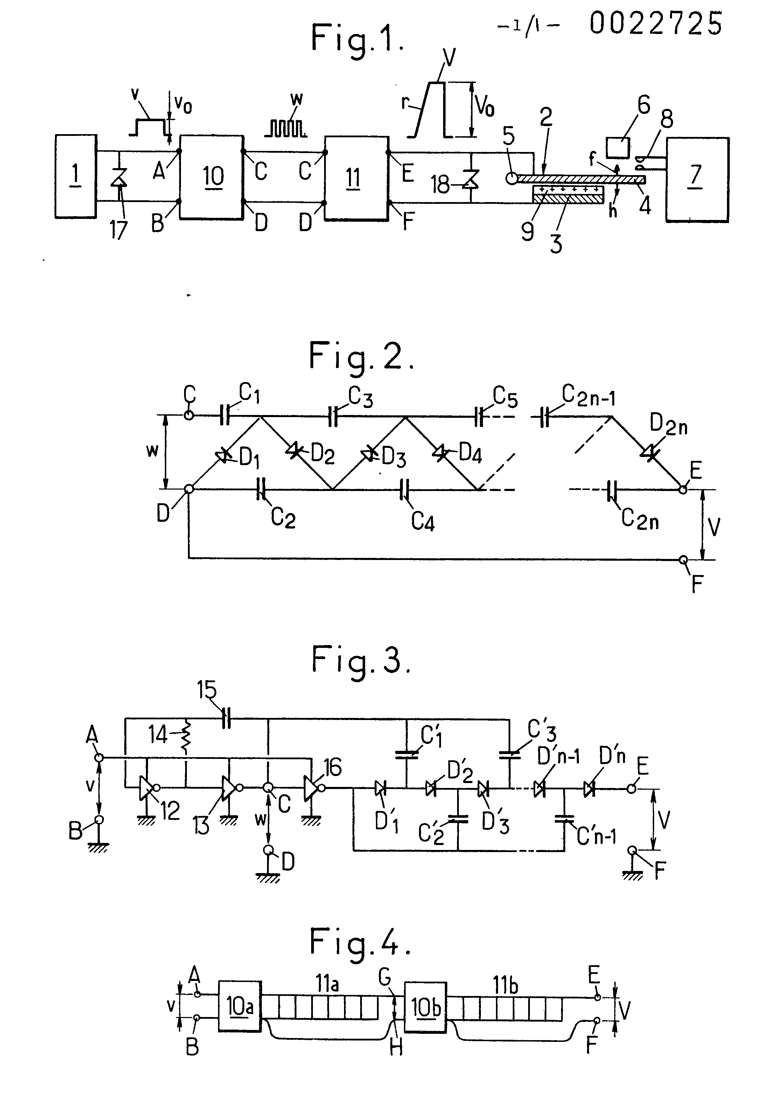

On rappelle qu'un électret est une feuille diélectrique mince chargée électriquement en permanence au moins au voisinage de l'une de ces deux faces, ainsi qu'il a été schématisé par les signes + sur la fig. 1, étant bien entendu que la charge en question pourrait aussi bien être négative que positive, selon les besoins.

Le sens du montage et la polarisation de cet électret 9 sont tels que ces charges électriques produisent un champ électrique exerçant sur l'électrode mobile 4 une force électrostatique $\underline{h}$ opposée à la force $\underline{f}$.

L'interposition de cet électret entre les électrodes 3 et 4 présente le double avantage :

- d'assurer par elle-même une attraction électrostatique entre ces électrodes, indépendamment de toute polarisation extérieure,

– et d'améliorer la sensibilité du mécanisme vis-à-vis des signaux électriques de commande, lesquels produisent entre lesdites électrodes un champ électrique opposé à celui produit par l'électret et tendant par conséquent à réduire la force $\underline{h}$.

On trouvera de plus amples renseignements sur les transducteurs à électret du type décrit ci-dessus dans les brevets France EN 74 40506 dû à Jacques LEWINER et Gérard DREYFUS, et 78 22015 et 78 22016 dus à Jacques LEWINER, Gérard DREYFUS et Didier PERINO.

Les dispositifs transducteurs du genre en question présentent de nombreux avantages, en particulier un bon rendement énergétique et une grande autonomie, c'est-à-dire une aptitude à fonctionner sans apport d'énergie extérieure autre que les signaux de commande eux-mêmes.

Mais la haute impédance d'entrée de leur condensateur exige pour ces signaux de commande des tensions relativement élevées, souvent supérieures à 50 Volts, c'est-à-dire supérieures aux tensions délivrées par les piles et batteries habituelles.

Il est donc généralement nécessaire de recourir, pour alimenter les transducteurs considérés, à une source de tension continue relativement élevée, ou à une source de tension relativement faible associée à un élévateur de tension alimenté lui-même par une tension relativement élevée.

Pour remédier à ces inconvénients, c'est-à-dire pour permettre d'utiliser exclusivement une source de tension continue $\underline{v}$ relativement faible, sans recours à une autre source de tension continue relativement élevée, on interpose, selon l'invention, entre la source du premier type et le condensateur, un ensemble propre à élever sensiblement l'amplitude de cette tension au détriment de l'intensité du courant correspondant.

Les demandeurs ont en effet constaté que la quantité de courant consommée par les transducteurs considérés lors de leur fonctionnement est minime et que, par conséquent, la réduction de cette quantité de courant dans l'alimentation du condensateur, même dans une forte proportion, n'entraîne ici aucun inconvénient.

L'ensemble prévu pour élever ladite amplitude de tension sans faire appel à une énergie extérieure comprend, selon l'invention :

- un oscillateur 10 propre à transformer la tension $v$ en une tension alternative $w$ de même amplitude $vo$, à fréquence élevée F,

- et un circuit 11 propre à élever l'amplitude de la tension $w$ et à redresser cette tension de façon à élaborer la tension continue désirée V, d'amplitude $Vo$ relativement élevée, qui est appliquée entre les électrodes 3 et 4.

L'oscillateur 10 comprend au moins deux transistors complémentaires bipolaires, ou à effet de champ à grille isolée ( C MOS ), ou encore à effet de champ à jonction (J-FET), ainsi qu'un circuit résistance-capacité permettant de déterminer la fréquence d'oscillation F : une telle utilisation de transistors complémentaires est particulièrement intéressante car elle permet une consommation très réduite, en particulier en technologie C MOS.

Les deux transistors complémentaires considérés sont avantageusement montés en inverseur.

La fréquence F est de préférence comprise entre 100 Hz et 100 kHz.

Le circuit élévateur-redresseur 11 peut être constitué par un transformateur suivi d'un redresseur, mais pour permettre une intégration de l'ensemble électronique de commande du condensateur, ce qui est souvent précieux aux fins de miniaturisation, on préfère constituer le circuit 11 de l'une des manières qui ont été schématisées sur les figures 2 à 4.

Sur ces figures, on retrouve comme sur la fig. 1 :
- en A et B, les bornes d'entrée de l'oscillateur 10,
- en C et D, les bornes de sortie de cet oscillateur, qui sont également les bornes d'entrée du circuit élévateur-redresseur 11,
- et en E et F les bornes de sortie de ce dernier circuit.

Sur la fig. 2 est représenté un circuit 11 du type "pompe à diodes" pour lequel les deux bornes D et F sont directement connectées entre elles et éventuellement mises à la masse, une suite de 2 $n$ diodes $D_1$, $D_2 \ldots D_{2n}$ en série étant branchées entre les bornes D et E : ce montage comprend en outre deux séries de $n$ capacités, respectivement $C_1$, $C_3 \ldots C_{2n-1}$ et $C_2$, $C_4 \ldots C_{2n}$ montées de façon telle que chaque capacité $C_i$ soit en parallèle sur l'ensemble des deux diodes en série $D_{i-1}$ et $D_i$, $i$ étant un entier compris entre 1 et 2 n, à l'exception de la capacité $C_1$, laquelle est montée entre la borne C et un point intermédiaire entre les deux diodes $D_1$ et $D_2$.

Avec les circuits de ce type, on sait que si le premier étage, composé de la diode $D_1$ et de la capacité $C_1$, est alimenté par une tension alternative U, ce premier étage élabore une tension continue de la même amplitude U et chaque étage d'ordre $i$, composé de la diode $D_i$ et de la capacité $C_i$, reçoit une tension continue d'amplitude (i-1) U et y ajoute une portion supplémentaire de tension d'amplitude U, ce qui élabore une tension d'amplitude iU.

La tension de sortie V recueillie entre les bornes de sortie E et F du circuit présente alors une amplitude Vo qui est $n$ fois supérieure à celle de la tension $w$ appliquée entre les bornes d'entrée C et D de ce circuit.

En réalité, cette amplitude totale Vo n'est pas atteinte dès la première alternance du signal alternatif $w$ : si la "pompe à diodes" considérée comprend $n$ étages, ladite amplitude n'est atteinte qu' après les $n$ premières alternances de ce signal ; c'est ce léger retard qui a été schématisé par le front ou rampe oblique $r$ sur l'impulsion de tension V représentée sur la fig. 1.

Le schéma selon la fig. 3 permet de réduire le nombre des étages $i$.

Sur cette fig. 3, on voit à gauche l'oscillateur comprenant deux circuits inverseurs 12, 13, une résistance 14 et une capacité 15.

Le circuit élévateur-redresseur, représenté sur la partie de droite de cette fig. 3, comprend ici un troisième inverseur 16 constitué encore à l'aide de transistors complémentaires, de préférence du type MOS, puis une suite de diodes $D'_1$, $D'_2$, $D'_3$... $D'_n$ et de capacités $C'_1$, $C'_2$... $C'_{n-1}$, montées de la même manière que sur la fig. 2 (montage parfois désigné sous l'appellation "type COCKCROFT").

La tension V recueillie à la sortie de ce montage a, comme la précédente, une amplitude $n$ fois supérieure à celle de la tension $w$ appliquée à son entrée, bien que les nombres des diodes et capacités soient nettement inférieurs, étant réduits de 2n à respectivement n et n-1.

Une autre manière de réduire le nombre des étages diodes-capacités a été schématisée sur la fig. 4.

Sur cette figure, l'ensemble comprenant l'oscillateur et l'élévateur-redresseur a été dédoublé en ce sens qu'à la sortie d'un premier ensemble de ce type, composé d'un oscillateur 10a et d'un élévateur-redresseur 11a à p étages, est prévu un second ensemble du même type, composé d'un oscillateur $10_b$ et d'un élévateur-redresseur $11_b$ à p étages.

Dans ce cas, chacun des étages du circuit 11a augmente de la quantité $vo$ l'amplitude de la tension qui a été élaborée par l'étage précédent, l'amplitude de la tension recueillie à la sortie du premier ensemble 10a, 11a, c'est-à-dire entre ses bornes G et H, est

égale à $pv_o$ et chacun des étages du circuit $11_b$ permet d'accroître de cette quantité $pv_o$ l'amplitude de la tension reçue de l'étage précédent, de sorte que la tension V recueillie finalement entre les bornes de sortie E et F de ce circuit $11_b$ a une amplitude $p^2v_o$.

Si l'on considère, à titre comparatif, que l'amplitude de cette tension de sortie est égale à $n$ fois celle $v_o$ de la tension d'entrée $v$, comme pour les modes de réalisation précédents, on constate que p est égal à $\sqrt{n}$ et que, dans la variante de la fig. 4, le nombre total des étages diodes-capacités a été réduit de $n$ à $2\sqrt{n}$ : c'est ainsi que le montage de la fig. 4 permet de réduire de 49 à 14 le nombre des étages considérés au prix, il est vrai, de l'addition d'un oscillateur.

S'il en est besoin, on ajoute des diodes Zener ou organes limiteurs de tension analogues 17, 18 respectivement entre les bornes A et B et entre les bornes E et F pour limiter les tensions appliquées entre ces bornes.

A titre d'exemple, on peut prévoir pour les amplitudes $v_o$ et $V_o$ des tensions $v$ et $V$, des valeurs respectives de 5 Volts et de 100 Volts, le coefficient $n$ étant alors égal à 20.

Dans un tel cas, l'intensité du courant électrique correspondant à chaque signal de tension est elle-même réduite d'un coefficient légèrement supérieur à 20 par rapport à celle des signaux d'origine (l'écart avec le coefficient 20 étant dû aux pertes de la transformation), mais ce n'est pas un inconvénient puisque le fonctionnement du montage ne consomme pratiquement pas de courant électrique.

Comme indiqué précédemment, la création de signaux de tension "renforcés" ou "gonflés" du type décrit ci-dessus se prête remarquablement bien au déclenchement des basculements des électrodes mobiles faisant partie de condensateurs, en particulier dans le cas où ces derniers sont d'un type à électret.

D'une façon générale, l'amplitude des déplacements ainsi commandés d'une telle électrode mobile est supérieure à 10 microns au niveau d'un point moyen de cette électrode, et correspond à une séparation véritable, au moins provisoire, entre les deux électrodes.

Dans des modes de réalisation préférés, cette séparation est très nette, et même assurée d'une manière irréversible au point que le retour de l'électrode mobile, en sa position initiale, exige une manoeuvre volontaire de réarmement, généralement manuelle, même après disparition du phénomène ayant provoqué le basculement : c'est le cas des applications qui ont été décrites dans les deux brevets EN 78 22015 et 78 22016 ci-dessus.

On notera de plus que l'invention se prête spécialement bien aux applications visées par ce dernier brevet, selon lesquelles les signaux de tension de commande sont créés par induction dans un enroulement conducteur, à partir des variations d'un champ ou flux magnétique traversant cet enroulement, puis par redressement.

Les variations ainsi engendrées sont par exemple dues aux déplacements d'un aimant, éventuellement · monté sur un flotteur (cas de la détection d'un niveau à travers une paroi amagnétique),ou encore à l'apparition d'une surintensité sur le primaire d'un transformateur dont le secondaire est constitué par l'enroulement considéré.

Dans un mode de réalisation préféré, les variations en question sont dues à la naissance d'un courant de fuite sur l'un des deux conducteurs d'un cordon d'alimentation électrique d'appareil domestique, ces conducteurs formant les deux primaires d'un transformateur différentiel dont le secondaire est constitué par l'enroulement ci-dessus, les signaux induits en question étant alors redressés et exploités pour couper l'un de ces deux conducteurs.

Dans un tel cas, il peut arriver que lesdits signaux induits soient trop faibles pour commander directement les basculements d'une électrode mobile, même si le nombre des spires au secondaire est très élevé, et donc exigent une amplification : l'invention permet d'assurer cette amplification d'une manière particulièrement élégante sans recourir à une alimentation électrique extérieure.

De nombreuses autres applications peuvent être envisagées selon l'invention pour l'utilisation d'une tension renforcée de la manière autonome décrite ci-dessus en vue de commander les basculements d'une électrode mobile : on peut citer entre autres l'affichage électrostatique faisant intervenir un déplacement, l'entraînement d'un moteur rotatif ou linéaire à électrets, la détection de la rupture de fusibles tels que ceux alimentés en basse tension et montés par exemple à bord de véhicules, la détection de faux contacts, le déclenchement d'un vibreur acoustique à marteau, etc...

En suite de quoi, et quel que soit le mode de réalisation adopté, on obtient finalement des dispositifs transducteurs dont la constitution et le fonctionnement résultent suffisamment de ce qui précède.

Ces transducteurs présentent de nombreux avantages par rapport à ceux antérieurement connus, et en particulier les suivants :
- l'amplitude de leur tension de commande $v$ est augmentée dans une proportion très importante, laquelle peut facilement dépasser un facteur de 10, et ce sans recours à une source de tension extérieure, ce qui permet d'utiliser pour ladite commande des sources de tensions continues relativement basses ;
- la réponse de la commande en question est très rapide, le temps de cette réponse étant égal à $n/F$ secondes dans l'hypothèse où la fréquence du circuit oscillateur est égale à F et où le nombre d'étages diodes-capacités du circuit élévateur est égal à $n$ : c'est ainsi que, si F égale 5 kHz et si $n$ égale 10, ce temps de réponse est de 2ms seulement alors que, pour un asservissement au courant alternatif du réseau, dont la fréquence est de 50 Hz, asservissement nécessitant l'exploitation d'une alternance de ce courant, le temps de réponse est de l'ordre de 0,2 seconde ;

- l'ensemble des circuits 10 et 11 est facilement intégrable et se prête donc à la miniaturisation ;

- le déclenchement du fonctionnement de l'oscillateur suppose le dépassement d'un seuil minimum pour la basse tension d'attaque, ce qui permet d'éviter le recours à des moyens spéciaux pour supprimer les hésitations au voisinage du seuil de déclenchement des basculements de l'électrode mobile.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :

- celles où plusieurs circuits d'alimentation du type de ceux décrits ci-dessus seraient utilisés en association, de tels circuits étant par exemple au nombre de deux, conçus respectivement pour engendrer des signaux de tension de commande de signes opposés destinés respectivement à commander les basculements d'une même électrode mobile dans deux sens opposés,

- celles où l'électrode mobile du condensateur serait agencée de façon à être entraînée essentiellement ou exclusivement par la force électrostatique due aux signaux de commande, lorsque cette force dépasse la force antagoniste due à l'électret s'il est prévu un tel électret, cette électrode mobile étant alors montée, non pas de façon à "basculer" de l'une à l'autre de deux positions stables, mais de façon à tourner autour d'un axe parallèle à la direction de la susdite force ou à se déplacer perpendiculairement à cette force (moteur rotatif ou linéaire, notamment à électret).

13

0022725

<u>REVENDICATIONS</u>

1.- Dispositif transducteur destiné à transformer des signaux d'une tension électrique continue ou redressée $v$ d'amplitude relativement faible en déplacements d'une électrode mobile d'un condensateur, caractérisé en ce qu'il comprend, interposés successivement entre la source (1) de la tension continue $v$ et le condensateur (2), un oscillateur électrique (10) comportant au moins deux transistors complémentaires, de préférence à effet de champ, propre à transformer ladite tension $v$ en une tension alternative de même amplitude à fréquence relativement élevée, et un circuit (11) propre à élever l'amplitude de ladite tension alternative et à redresser cette tension de façon à élaborer une tension continue V d'amplitude très supérieure à celle de la tension $v$, laquelle tension V est appliquée entre les électrodes (3,4) du condensateur.

2.- Dispositif transducteur selon la revendication 1, caractérisé en ce qu'un électret (9) est interposé entre les deux électrodes (3,4) du condensateur.

3.- Dispositif transducteur selon l'une quelconque des revendications 1 et 2, caractérisé en ce que l'amplitude de la tension v est comprise entre 1 et 25 Volts et celle de la tension V, entre 50 et 250 Volts.

4.- Dispositif transducteur selon l'une quelconque des précédentes revendications, caractérisé en ce que la fréquence de la tension sortant de l'oscillateur (10) est comprise entre 100 Hz et 100 kHz.

5.- Dispositif transducteur selon l'une quelconque des précédentes revendications, caractérisé en ce que l'oscillateur (10) comprend au moins une paire de transistors complémentaires montés en inverseur, notamment du type C MOS.

6.- Dispositif transducteur selon l'une quelconque des précédentes revendications, caractérisé en ce que le circuit élévateur-redresseur (11) est constitué d'une façon en soi connue par une série d'étages additionnels de tension à diode ($D_i$, $D'_i$) et capacité ($C_i$, $C'_i$).

7.- Dispositif transducteur selon les revendications 5 et 6, caractérisé en ce qu'il comprend, entre l'oscillateur (12-15) et la série d'étages additionnels de tension, un troisième inverseur (16), notamment du type C MOS.

8.- Dispositif transducteur selon l'une quelconque des précédentes revendications, caractérisé en ce qu'il comprend, en plus d'un premier ensemble composé d'un oscillateur (10a) du genre indiqué ci-dessus et d'un circuit élévateur-redresseur (11a) du genre indiqué ci-dessus, au moins un second ensemble du même genre ($10_b$, $11_b$), l'oscillateur ($10_b$) de ce second ensemble étant alimenté par la sortie du circuit élévateur-redresseur (11a) du premier ensemble.

9.- Dispositif transducteur selon l'une quelconque des revendications 6 à 8, caractérisé en ce que chaque ensemble composé d'un oscillateur et d'un circuit élévateur-redresseur constitue un composant intégré.

10.- Dispositif transducteur selon l'une quelconque des revendications 1 à 5, caractérisé en ce que le circuit élévateur-redresseur (10) comprend un transformateur et un redresseur.

11.- Dispositif transducteur selon l'une quelconque des précédentes revendications, caractérisé en ce qu'un dispositif de limitation de tension (17, 18) est disposé à l'entrée de l'oscillateur (10) et/ou à la sortie du circuit élévateur-redresseur (11).

12.- Dispositif transducteur selon l'une quelconque des précédentes revendications, caractérisé en ce que les signaux de tension continue $\underline{v}$ sont produits par induction, dans un enroulement conducteur, à partir des variations d'un champ ou flux magnétique
traversant cet enroulement, puis par redressement.

# Fig.1.

# Fig.2.

# Fig.3.

# Fig.4.

**Office européen**
**des brevets**

**RAPPORT DE RECHERCHE EUROPEENNE**

0022725

Numéro de la demande
EP 80 40 1057

## DOCUMENTS CONSIDERES COMME PERTINENTS

| Catégorie | Citation du document avec indication, en cas de besoin, des parties pertinentes | Revendication concernée |
|---|---|---|
| A | US - A - 3 863 135 (ATWOOD)  <br><br> * Colonne 2, ligne 33 - colonne 5, ligne 55 * | 1,8-10 |
| A | US - A - 3 824 447 (KABUSHIKI)  <br><br> * Colonne 2, ligne 1 - colonne 5, ligne 48 * | 1,5,7,9 |

**CLASSEMENT DE LA DEMANDE (Int. Cl. 3)**

H 02 M   3/155
H 01 H 59/00
          47/00
G 01 R 19/165

**DOMAINES TECHNIQUES RECHERCHES (Int. Cl. 3)**

H 02 M   3/155
H 01 H 59/00
          47/00
G 01 R 19/165

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 20-10-1980 | BERTIN |

OEB Form 1503.1   06.78